# EUROPÄISCHE PATENTANMELDUNG

(11) **EP 2 573 698 A2**
(43) Veröffentlichungstag der Anmeldung: **27.03.2013**
(21) Anmeldenummer: 12179929.0
(22) Anmeldetag: 09.08.2012
(51) Int. Cl.: G06F 21/00

(54) **Reduzierung von kompromittierender Abstrahlung eines Bildschirms**

(30) Priorität: 21.09.2011 DE 102011083140
(71) Anmelder: Siemens Aktiengesellschaft, 80333 München (DE)
(72) Erfinder: Falk, Rainer, 85586 Poing (DE)

(57) **Zusammenfassung**

Es wird eine Vorrichtung (1) zur Reduzierung von kompromittierender Abstrahlung vorgeschlagen, welche ein Erzeugungsmittel (2) zum Erzeugen einer Abfolge (A) von Bildern aus Nutzbildern (NB) und Blendbildern (BB), eine mit dem Erzeugungsmittel (2) gekoppelte Anzeigeeinrichtung (3) zum Anzeigen der erzeugten Abfolge (A), und eine der Anzeigeeinrichtung (3) nachgeordnete Dämpfungseinrichtung (4) aufweist. Die Dämpfungseinrichtung (4) ist dazu eingerichtet, die Blendbilder (BB) der erzeugten Abfolge (A) stärker als die Nutzbilder (NB) der erzeugten Abfolge (A) zu dämpfen.

Dadurch wird ein Abstrahlschutz erreicht, indem die Anzeigeeinrichtung selbst dazu verwendet wird, neben den Nutzbildern auch entsprechende Blendbilder auszugeben. Durch die Überlagerung der Nutzbilder mit den Blendbildern ist die Wahrscheinlichkeit einer erfolgreichen Seitenkanalattacke vermindert bzw. minimiert. Für den Nutzer der Dämpfungseinrichtung (4) sind die Nutzbilder (NB) sichtbar.

Ferner wird ein Verfahren zur Reduzierung von kompromittierender Abstrahlung vorgeschlagen.

## Beschreibung

Die vorliegende Erfindung betrifft eine Vorrichtung und ein Verfahren zur Reduzierung von kompromittierender Abstrahlung eines Bildschirms.

Alle elektrischen Geräte, insbesondere Bildschirme, senden elektromagnetische Wellen aus. Diese so genannte kompromittierende Abstrahlung kann mit geeigneten Empfangseinrichtungen auch über größere Entfernungen, von beispielsweise einigen zehn Metern, hinweg aufgefangen werden, um die abgestrahlten Informationen auszuspionieren. Insbesondere kann ein Angreifer dadurch das abgestrahlte Signal rekonstruieren und auf einem zweiten Bildschirm darstellen.

Ein Beispiel für eine Technik zur elektronischen Spionage ist Van-Eck-Phreaking, bei der die elektromagnetischen Abstrahlungen empfangen werden. Diese Technik gehört zur Gruppe der so genannten Seitenkanalattacken.

Es ist daher eine Aufgabe der vorliegenden Erfindung, einen Abstrahlschutz für Informationen, insbesondere sicherheitskritischen Informationen, zu schaffen.

Daher wird erfindungsgemäß eine Vorrichtung zur Reduzierung von kompromittierender Abstrahlung vorgeschlagen, welche ein Erzeugungsmittel, eine mit dem Erzeugungsmittel gekoppelte Anzeigeeinrichtung und eine der Anzeigeeinrichtung nachgeordnete Dämpfungseinrichtung aufweist.

Dabei ist das Erzeugungsmittel zum Erzeugen einer Abfolge von Bildern aus Nutzbildern und Blendbildern eingerichtet. Die Anzeigeeinrichtung ist zum Anzeigen der erzeugten Abfolge eingerichtet. Ferner ist die der Anzeigeeinrichtung nachgeordnete Dämpfungseinrichtung dazu eingerichtet, die Blendbilder der erzeugten Abfolge stärker als die Nutzbilder der erzeugten Abfolge zu dämpfen.

Erfindungsgemäß wird ein Abstrahlschutz dadurch erreicht, indem die Anzeigeeinrichtung selbst dazu verwendet wird, neben den Nutzbildern auch entsprechende Blendbilder auszugeben. Durch die Überlagerung der Nutzbilder mit den Blendbildern ist die Wahrscheinlichkeit einer erfolgreichen Seitenkanalattacke vermindert bzw. minimiert. Dabei wird durch das Überblenden der elektromagnetischen Strahlung der Nutzbilder durch die elektromagnetische Strahlung der Blendbilder sichergestellt, dass ein Aufnehmen ausschließlich der elektromagnetischen Strahlung der Nutzbilder durch einen Angreifer zur Rekonstruktion der Nutzbilder verhindert ist.

Durch die stärkere Dämpfung der Nutzbilder gegenüber der Dämpfung der Blendbilder sind die Nutzbilder für den Nutzer der Dämpfungseinrichtung freigeschaltet, so dass sie für den Nutzer sichtbar sind.

Die Nutzbilder enthalten die Nutzinformationen, insbesondere sicherheitskritische Informationen. Demgegenüber sind die Blendbilder dazu geeignet, die elektromagnetische Strahlung der Nutzbilder durch die Anzeigeeinrichtung zu überblenden, so dass ein Aufnehmen ausschließlich der elektromagnetischen Strahlung der Nutzbilder durch einen Angreifer verhindert ist.

Da vorzugsweise nur die Nutzbilder durch die Dämpfungseinrichtung freigeschaltet werden, so dass sie für einen Nutzer der Dämpfungseinrichtung sichtbar sind, können die Blendbilder hinsichtlich ihres Inhalts nahezu beliebig gewählt werden, ohne die sichtbaren Nutzbilder zu beeinflussen.

Die Blendbilder können auch als Verschleierungsbilder oder Kompensationsbilder bezeichnet werden.

Gemäß einer Weiterbildung dämpft die Dämpfungseinrichtung die Blendbilder der erzeugten Abfolge derart stärker als die Nutzbilder der erzeugten Abfolge, dass im Wesentlichen die Nutzbilder der gedämpften Abfolge visuell wahrnehmbar sind.

Für den Nutzer der Dämpfungseinrichtung, die auch als Shutter-Einrichtung bezeichnet werden kann, sind im Wesentlichen die Nutzbilder visuell wahrnehmbar. Dabei ist es möglich, dass auch die Blendbilder visuell wahrnehmbar sind, allerdings ist die Dämpfung der Blendbilder derart stärker als die Dämpfung der Nutzbilder, dass der Nutzer die Nutzbilder deutlich von den Blendbildern unterscheiden kann.

Gemäß einer weiteren Weiterbildung ist die Dämpfungseinrichtung dazu eingerichtet, die Blendbilder der erzeugten Abfolge um ein eingestelltes Verhältnis stärker als die Nutzbilder der erzeugten Abfolge zu dämpfen.

Das Verhältnis zwischen der Dämpfung der Blendbilder und der Dämpfung der Nutzbilder ist insbesondere derart eingestellt, dass die Wahrscheinlichkeit erfolgreicher Seitenkanalangriffe minimiert wird und der Nutzer die Nutzbilder deutlich von den Blendbildern unterscheiden kann.

Gemäß einer weiteren Weiterbildung weist die Vorrichtung zur Reduzierung von kompromittierender Abstrahlung ein Einstellmittel auf. Das Einstellmittel ist zum Einstellen des Verhältnisses zwischen der Dämpfung der Blendbilder der erzeugten Abfolge und der Dämpfung der Nutzbilder der erzeugten Abfolge geeignet.

Gemäß einer weiteren Weiterbildung ist die Dämpfungseinrichtung als ein Shutter-Vorsatz ausgebildet. Der Shutter-Vorsatz ist beispielsweise auf die Anzeigeeinrichtung aufgeklebt. Weiter kann der Shutter-Vorsatz mittels eines Klettverschlusses mit der Anzeigeeinrichtung mechanisch gekoppelt werden. Alternativ kann der Shutter-Vorsatz mit zumindest einem Bügel an der Anzeigeeinrichtung gehaltert werden oder auf einem Ständer vor der Anzeigeeinrichtung angeordnet werden. Außerdem ist es möglich, den Shutter-Vorsatz in einem Bildschirm der Anzeigeeinrichtung zu integrieren.

Gemäß einer weiteren Weiterbildung weist die Vorrichtung zur Reduzierung von kompromittierender Abstrahlung ein Ansteuermittel zum Ansteuern des Shutter-Vorsatzes auf. Dabei steuert das Ansteuermittel den Shutter-Vorsatz insbesondere derart an, dass die Blendbilder der erzeugten Abfolge nicht durchgelassen werden und die Nutzbilder der erzeugten Abfolge durchgelassen werden. Beispielsweise schaltet das Ansteuermittel dazu den Shutter-Vorsatz gemäß der Abfolge von Nutzbildern und Blendbildern ein und aus.

Gemäß einer weiteren Weiterbildung weist der Shutter-Vorsatz eine Mehrzahl von einzeln ansteuerbaren Bereichen zum Dämpfen der Blendbilder und der Nutzbilder der erzeugten Abfolge auf.

Da die räumliche Anordnung des Shutter-Vorsatzes zur Anzeigeeinrichtung fest ist, kann der Shutter-Vorsatz auch mehrere Bereiche oder Felder aufweisen, die unabhängig lichtdurchlässig und lichtundurchlässig geschaltet werden können. Dann können jeweils einzelne Felder unabhängig auf durchlässig oder gesperrt geschaltet werden. Es kann demnach auch ein Bild, welches zu einem Zeitpunkt angezeigt wird, Anteile eines darzustellenden Nutzbildes wie auch Anteile eines Blendbildes aufweisen.

Gemäß einer weiteren Weiterbildung ist die Dämpfungseinrichtung als eine 3D-Shutter-Brille ausgebildet.

Bei dem Einsatz einer kommerziell verfügbaren 3D-Shutter-Brille kann eine relativ preiswerte Hardware Verwendung finden. Es muss auch kein spezieller Bildschirm verwendet werden. Somit ist diese Weiterbildung sehr kostengünstig.

Außerdem ist bei der Verwendung einer 3D-Shutter-Brille der Bildschirminhalt für vorbeigehende Personen oder bei Beobachtung aus der Ferne beispielsweise über ein Fernrohr nichts sagend.

Gemäß einer weiteren Weiterbildung ist das Erzeugungsmittel in einer Steuervorrichtung zum Steuern der Anzeigeeinrichtung integriert. Die Steuervorrichtung ist insbesondere ein mit der Anzeigeeinrichtung gekoppelter Computer.

Damit kann das Erzeugungsmittel insbesondere als Software-Produkt in dem Computer integriert werden.

Gemäß einer weiteren Weiterbildung ist das Erzeugungsmittel in der Anzeigeeinrichtung integriert.

Auch bei dieser Weiterbildung kann das Erzeugungsmittel als Software-Produkt ausgestaltet werden und dabei einfach in der Anzeigeeinrichtung, insbesondere einem Bildschirm, integriert werden.

Gemäß einer weiteren Weiterbildung ist das Erzeugungsmittel in einer dedizierten Vorrichtung integriert, welche zwischen der Anzeigeeinrichtung und der Steuervorrichtung zum Steuern der Anzeigeeinrichtung gekoppelt ist.

Durch die Integration des Erzeugungsmittels in einer dedizierten Vorrichtung kann sowohl eine herkömmliche Steuervorrichtung, beispielsweise ein herkömmlicher Computer, als auch eine herkömmliche Anzeigeeinrichtung, beispielsweise ein herkömmlicher Bildschirm, verwendet werden.

Gemäß einer weiteren Weiterbildung ist das Erzeugungsmittel dazu eingerichtet, die Blendbilder mittels pseudo-zufälligem Rauschens, mittels vorbestimmter geometrischer Muster oder als Komplementärbilder zu den Nutzbildern zu erzeugen.

Die Zeitpunkte der Ausgabe der Nutzbilder werden vorzugsweise unregelmäßig, nicht-periodisch gewählt. Es kann dabei mit einem Pseudo-Zufallsgenerator bestimmt werden, wann ein Nutzbild und wann ein Blendbild ausgegeben wird.

Gemäß einer weiteren Weiterbildung weist die Anzeigeeinrichtung eine maximale Bildwiederholrate von 200 Hz bis 1000 Hz auf. Bevorzugt liegt die maximale Bildwiederholrate zwischen 500 Hz und 1000 Hz, besonders bevorzugt zwischen 800 Hz und 1000 Hz.

Gemäß einer weiteren Weiterbildung weist die Vorrichtung zur Reduzierung von kompromittierender Abstrahlung ein Bereitstellungsmittel, ein erstes Erzeugungsmittel, ein zweites Erzeugungsmittel, ein drittes Erzeugungsmittel, eine Anzeigeeinrichtung, eine erste Dämpfungseinrichtung, eine zweite Dämpfungseinrichtung und eine dritte Dämpfungseinrichtung auf.

Das Bereitstellungsmittel ist zum Bereitstellen der Nutzbilder als RGB-Signale mit einem Rot-Signal, einem Grün-Signal und einem Blau-Signal eingerichtet.

Das erste Erzeugungsmittel ist dazu eingerichtet, die Rot-Signale zu empfangen und abhängig davon eine Abfolge aus Rot-Nutzbildanteilen und Rot-Blendbildanteilen zu erzeugen.

Das zweite Erzeugungsmittel ist dazu eingerichtet, die Grün-Signale zu empfangen und abhängig davon eine Abfolge aus Grün-Nutzbildanteilen und Grün-Blendbildanteilen zu erzeugen.

Das dritte Erzeugungsmittel ist dazu eingerichtet, die Blau-Signale zu empfangen und abhängig davon eine Abfolge aus Blau-Nutzbildanteilen und Blau-Blendbildanteilen zu erzeugen.

Die Anzeigeeinrichtung ist zum Anzeigen der erzeugten Abfolgen eingerichtet.

Die erste Dämpfungseinrichtung ist dazu eingerichtet, die Rot-Blendbildanteile stärker als die Rot-Nutzbildanteile zu dämpfen.

Die zweite Dämpfungseinrichtung ist dazu eingerichtet, die Grün-Blendbildanteile stärker als die Grün-Nutzbildanteile zu dämpfen.

Ferner ist die dritte Dämpfungseinrichtung dazu eingerichtet, die Blau-Blendbildanteile stärker als die Blau-Nutzbildanteile zu dämpfen.

Das jeweilige Mittel, beispielsweise das Erzeugungsmittel oder das Einstellmittel, kann hardwaretechnisch oder auch softwaretechnisch implementiert sein. Bei einer hardwaretechnischen Implementierung kann das jeweilige Mittel als Vorrichtung oder als Teil einer Vorrichtung, zum Beispiel als Computer oder als Mikroprozessor ausgebildet sein. Bei einer softwaretechnischen Implementierung kann das jeweilige Mittel als Computerprogrammprodukt, als eine Funktion, als eine Routine, als Teil eines Programmcodes oder als ausführbares Objekt ausgebildet sein.

Des Weiteren wird ein Verfahren zur Reduzierung von kompromittierender Abstrahlung vorgeschlagen. In einem ersten Schritt wird eine Abfolge von Bildern aus Nutzbildern und Blendbildern erzeugt. In einem zweiten Schritt wird die erzeugte Abfolge mittels einer Anzeigevorrichtung, insbesondere mittels eines Bildschirms, angezeigt. In einem dritten Schritt werden die angezeigten Nutzbilder und Blendbilder derart gedämpft, dass die Blendbilder stärker als die Nutzbilder gedämpft werden.

Weiterhin wird ein Computerprogrammprodukt vorgeschlagen, welches auf einer programmgesteuerten Einrichtung die Durchführung zumindest eines Schrittes des wie oben erläuterten Verfahrens zur Reduzierung von kompromittierender Abstrahlung veranlasst.

Ein Computerprogramm-Produkt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: ein schematisches Blockschaltbild eines ersten Ausführungsbeispiels einer Vorrichtung zur Reduzierung von kompromittierender Abstrahlung;
- Fig. 2: ein schematisches Blockschaltbild eines zweiten Ausführungsbeispiels einer Vorrichtung zur Reduzierung von kompromittierender Abstrahlung;
- Fig. 3: ein Beispiel für ein Nutzbild;
- Fig. 4: ein erstes Beispiel für ein Blendbild;
- Fig. 5: ein zweites Beispiel für ein Blendbild;
- Fig. 6: ein drittes Beispiel für ein Blendbild;
- Fig. 7: ein Ausführungsbeispiel eines Ansteuersignals zur Ansteuerung der Dämpfungseinrichtung gemäß der Abfolge von Nutzbildern und Blendbildern; und
- Fig. 8: eine schematische Darstellung eines zweiten Ausführungsbeispiels der Vorrichtung zur Reduzierung von kompromittierender Abstrahlung;
- Fig. 9: eine schematische Darstellung eines dritten Ausführungsbeispiels der Vorrichtung zur Reduzierung von kompromittierender Abstrahlung;
- Fig. 10: eine schematische Darstellung eines vierten Ausführungsbeispiels der Vorrichtung zur Reduzierung von kompromittierender Abstrahlung;
- Fig. 11: eine schematische Darstellung eines fünften Ausführungsbeispiels der Vorrichtung zur Reduzierung von kompromittierender Abstrahlung;
- Fig. 12: ein schematisches Blockschaltbild eines sechsten Ausführungsbeispiels der Vorrichtung zur Reduzierung von kompromittierender Abstrahlung; und
- Fig. 13: ein schematisches Ablaufdiagramm eines Verfahrens zur Reduzierung von kompromittierender Abstrahlung.

In den Figuren sind gleiche oder funktionsgleiche Elemente mit denselben Bezugszeichen versehen worden, sofern nichts anderes angegeben ist.

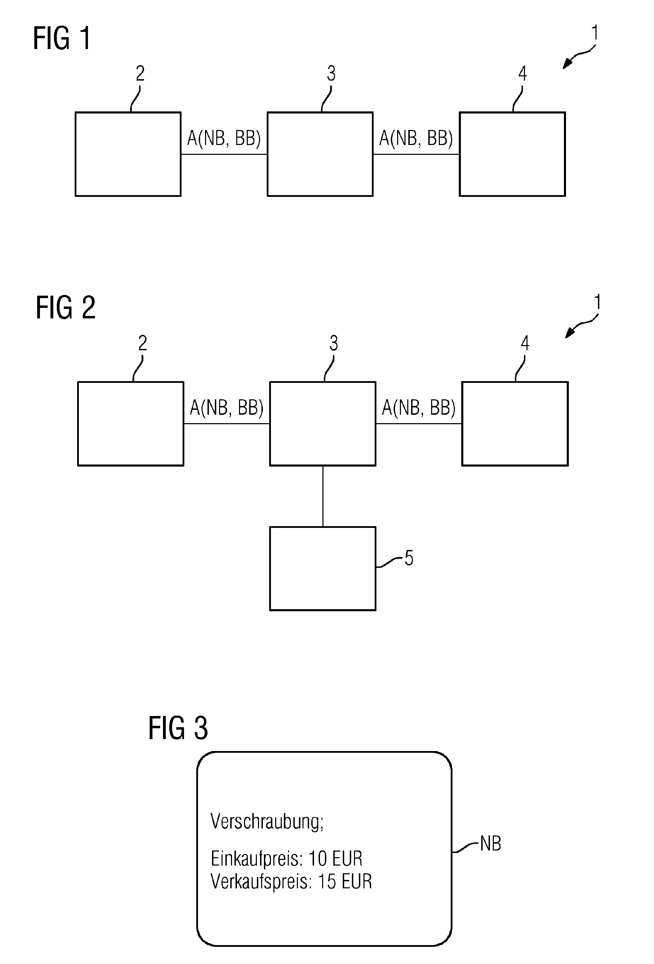

In Fig. 1 ist ein schematisches Blockschaltbild eines ersten Ausführungsbeispiels einer Vorrichtung 1 zur Reduzierung von kompromittierender Abstrahlung dargestellt.

Die Vorrichtung 1 zur Reduzierung von kompromittierender Abstrahlung weist ein Erzeugungsmittel 2, eine mit dem Erzeugungsmittel 2 gekoppelte Anzeigeeinrichtung 3 und eine der Anzeigeeinrichtung 3 nachgeordnete Dämpfungseinrichtung 4 auf. Das Erzeugungsmittel 2 ist zum Erzeugen einer Abfolge A von Bildern aus Nutzbildern NB und Blendbildern BB eingerichtet (A(NB,BB)). Das Erzeugungsmittel 2 kann die Blendbilder BB insbesondere mittels pseudo-zufälligem Rauschens, mittels vorbestimmter geometrischer Muster oder als Komplementärbilder zu den Nutzbildern NB erzeugen.

Die Anzeigeeinrichtung 3 ist zum Anzeigen der erzeugten Abfolge A aus Nutzbildern NB und Blendbildern BB eingerichtet. Die Anzeigeeinrichtung 3 ist insbesondere als Bildschirm oder Display ausgebildet. Die Anzeigeeinrichtung 3 hat eine maximale Bildwiederholrate von 200 Hz bis 1000 Hz, bevorzugt von 500 Hz bis 1000 Hz, besonders bevorzugt von 800 Hz bis 1000 Hz.

Die Dämpfungseinrichtung 4 ist der Anzeigeeinrichtung 3 nachgeordnet und ist dazu eingerichtet, die Blendbilder BB der erzeugten Abfolge A stärker als die Nutzbilder NB der erzeugten Abfolge A zu dämpfen. Die Dämpfungseinrichtung 4 kann auch als Shutter-Einrichtung ausgebildet sein, welche bei einem Nutzbild NB auf durchlässig und bei einem Blendbild BB auf nicht-durchlässig geschaltet wird.

Vorzugweise stärkt die Dämpfungseinrichtung 4 die Blendbilder BB der erzeugten Abfolge A derart stärker als die Nutzbilder NB der erzeugten Abfolge A, dass im Wesentlichen die Nutzbilder NB der gedämpften Abfolge A für den Nutzer der Dämpfungseinrichtung 4 visuell wahrnehmbar sind. Dabei werden die Blendbilder BB der erzeugten Abfolge A insbesondere um ein eingestelltes Verhältnis stärker gedampft als die Nutzbilder NB.

In Fig. 2 ist ein schematisches Blockschaltbild eines zweiten Ausführungsbeispiels der Vorrichtung 1 zur Reduzierung von kompromittierender Abstrahlung dargestellt. Das zweite Ausführungsbeispiel der Fig. 1 weist sämtliche Merkmale des ersten Ausführungsbeispiels der Fig. 1 auf. Zusätzlich hat die Vorrichtung 1 der Fig. 2 ein Einstellmittel 5. Das Einstellmittel 5 ist dazu eingerichtet, das Verhältnis zwischen der Dämpfung der Blendbilder BB der erzeugten Abfolge A und der Dämpfung der Nutzbilder NB der erzeugten Abfolge A einzustellen.

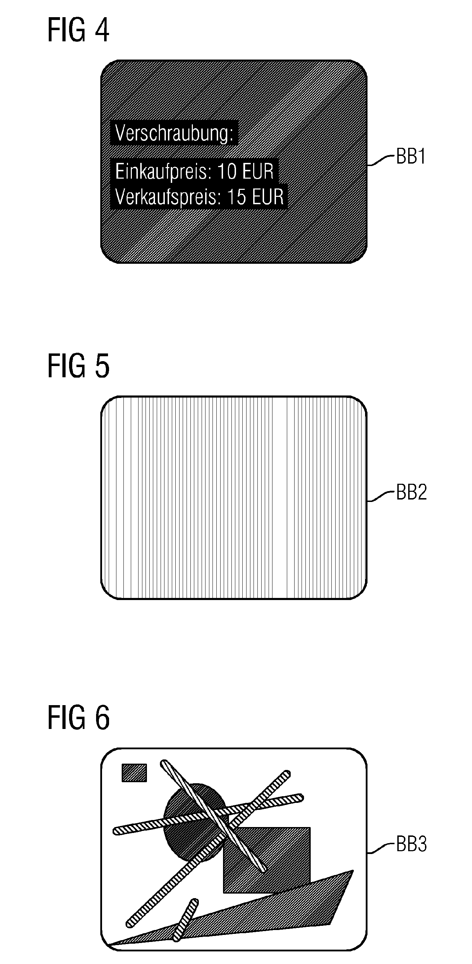

In Fig. 3 ist ein Beispiel für ein Nutzbild NB dargestellt, welches für den Nutzer der Dämpfungseinrichtung 4 relevante Informationen aufweist. In den darauf folgenden Fig. 4 bis 6 sind Beispiele für Blendbilder BB1, BB2, BB3 dargestellt.

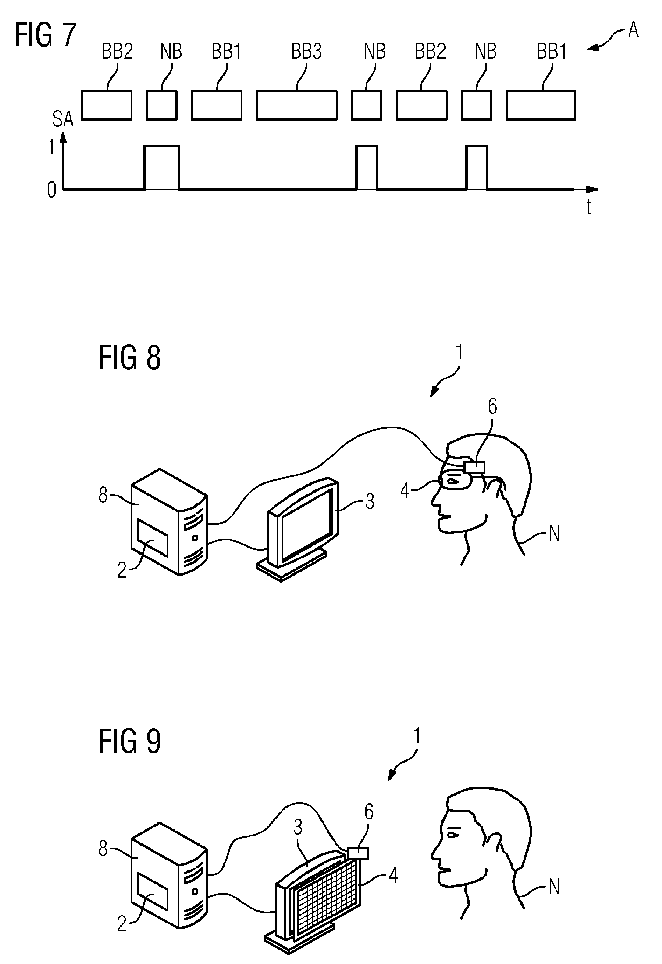

Weiter zeigt die Fig. 7 ein Ausführungsbeispiel eines Ansteuersignals SA zur Ansteuerung der Dämpfungseinrichtung 4 gemäß der darüber dargestellten Abfolge von Nutzbildern NB und Blendbildern BB1, BB2, BB3.

Immer nur dann, wenn ein Nutzbild NB von der Anzeigeeinrichtung 3 abgestrahlt wird, ist das Ansteuersignal SA auf 1, so dass die Dämpfungseinrichtung 4 auf durchlässig geschaltet wird. Immer dann, wenn ein Blendbild BB1-BB3 angezeigt wird, ist das Ansteuersignal SA auf 0, so dass die Dämpfungseinrichtung 4 auf undurchlässig geschaltet wird.

Fig. 8 zeigt eine schematische Darstellung eines zweiten Ausführungsbeispiels der Vorrichtung 1 zur Reduzierung von kompromittierender Abstrahlung. In der Fig. 8 trägt ein Nutzer N eine 3D-Shutter-Brille 4, welche mit einem Ansteuermittel 6 zum Ansteuern der 3D-Shutter-Brille 4 ausgestattet ist. Das Ansteuermittel 6 steuert die 3D-Shutter-Brille 4 mittels des Ansteuersignals SA an, welches beispielhaft in der Fig. 7 dargestellt ist.

Das Ansteuermittel 6 ist mit einem Computer 8 gekoppelt, welcher das Erzeugungsmittel 2 zum Erzeugen der Abfolge A von Bildern aus Nutzbildern NB und Blendbildern BB aufweist. Der Computer 8 stellt die erzeugte Abfolge A dem Ansteuermittel 6 bereit, so dass dieses das Ansteuersignal SA in Abhängigkeit der erzeugten Abfolge A generieren kann (siehe zum Beispiel Fig. 7).

Der Computer 8 ist ferner mit dem Bildschirm 3 gekoppelt, welcher die erzeugte Abfolge A aus Nutzbildern NB und Blendbildern BB1-BB3 anzeigt.

In einer Variante (nicht dargestellt) können der Bildschirm 3 und der Computer 8 als eine integrierte Komponente ausgestaltet sein, z.B. als Notebook, als Tablet-PC oder als sogenannter All-In-One-PC. In einer weiteren Variante ist die integrierte Komponente als ein Mobiltelefon mit integriertem Display und Steuereinheit oder um eine Bedieneinrichtung einer Automatisierungsanlage, z.B. einer Werkzeugmaschinensteuerung, mit Display und Steuerrechner ausgeprägt.

In Fig. 9 ist eine schematische Darstellung eines dritten Ausführungsbeispiels der Vorrichtung 1 zur Reduzierung von kompromittierender Abstrahlung dargestellt. Das Ausführungsbeispiel der Fig. 9 unterscheidet sich von dem Ausführungsbeispiel der Fig. 8 in der Ausführung der Dämpfungseinrichtung 4. In der Fig. 9 ist die Dämpfungseinrichtung 4 als ein Shutter-Vorsatz 4 ausgebildet, der direkt vor dem Bildschirm 3 angeordnet ist. Auch der Shutter-Vorsatz 4 hat ein Ansteuermittel 6, welches dazu eingerichtet ist, den Shutter-Vorsatz 4 anzusteuern, insbesondere ein- und auszuschalten, so dass die Blendbilder BB der erzeugten Abfolge A nicht bzw. gedämpft durchgelassen werden, wohingegen die Nutzbilder NB der erzeugten Abfolge A durchgelassen werden.

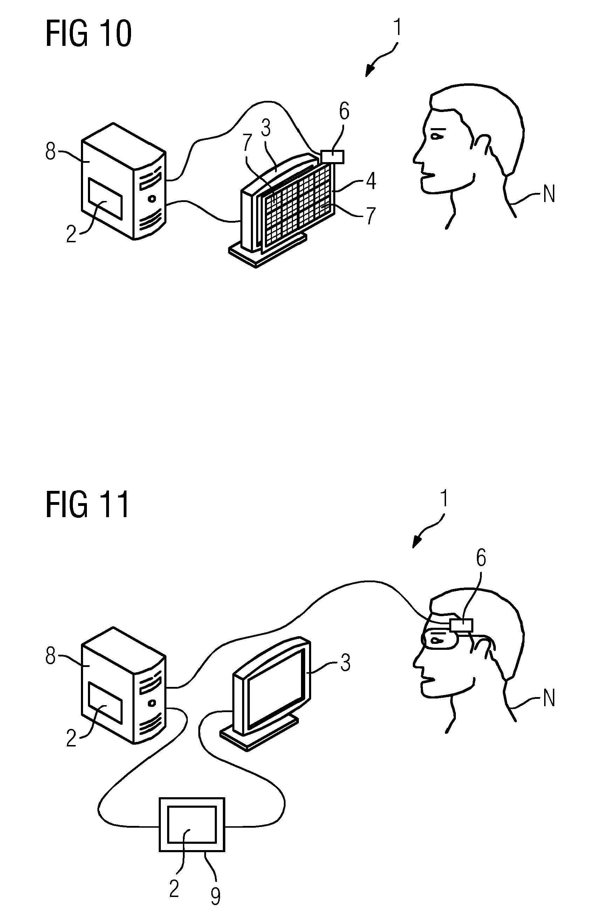

Ein weiteres Ausführungsbeispiel des Shutter-Vorsatzes 4 zeigt die Fig. 10. Gemäß der Fig. 10 hat der Shutter-Vorsatz 4 zwölf einzeln ansteuerbare Bereiche 7 zum Dämpfen der Blendbilder BB und der Nutzbilder NB der erzeugten Abfolge A.

In Fig. 11 ist eine schematische Darstellung eines fünften Ausführungsbeispiels der Vorrichtung 1 zur Reduzierung von kompromittierender Abstrahlung dargestellt. Das fünfte Ausführungsbeispiel der Fig. 11 unterscheidet sich von dem zweiten Ausführungsbeispiel der Fig. 8 dahingehend, dass das Erzeugungsmittel 2 nicht in dem Computer 8, sondern in einer dedizierten Vorrichtung 9 integriert ist, welche zwischen dem Bildschirm 3 und dem Computer 8 gekoppelt ist.

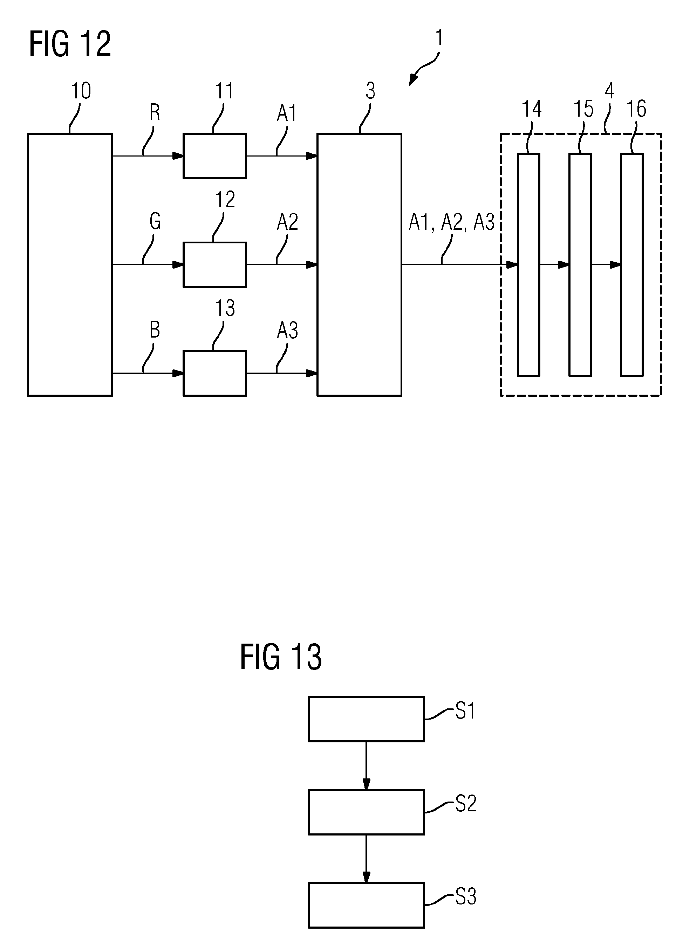

Fig. 12 zeigt ein schematisches Blockschaltbild eines sechsten Ausführungsbeispiels der Vorrichtung 1 zur Reduzierung von kompromittierender Abstrahlung. Die Vorrichtung 1 hat ein Bereitstellungsmittel 10, ein erstes Erzeugungsmittel 11, ein zweites Erzeugungsmittel 12, ein drittes Erzeugungsmittel 13, einen Bildschirm 3, eine erste Dämpfungseinrichtung 14, eine zweite Dämpfungseinrichtung 15 und eine dritte Dämpfungseinrichtung 16.

Das Bereitstellungsmittel 10 ist dazu eingerichtet, die Nutzbilder NB als RGB-Signale mit einem Rot-Signal R, einem Grün-Signal G und einem Blau-Signal B bereitzustellen und auszugeben. Das erste Erzeugungsmittel 11 empfängt die Rot-Signale R und erzeugt abhängig davon eine erste Abfolge A1 aus Rot-Nutzbildanteilen und Rot-Blendbildanteilen.

Das zweite Erzeugungsmittel 12 empfängt die Grün-Signale G und erzeugt abhängig davon eine zweite Abfolge A2 aus Grün-Nutzbildanteilen und Grund-Blendbildanteilen. Das dritte Erzeugungsmittel 13 empfängt die Blau-Signale B und erzeugt abhängig davon eine dritte Abfolge A3 aus Blau-Nutzbildanteilen und Blau-Blendbildanteilen.

Die den Erzeugungsmitteln 11-13 nachgeordnete Anzeigeeinrichtung 3 zeigt die erzeugten Abfolgen A1, A2, A3 gemäß dem RGB-Signal an.

Die erste Dämpfungseinrichtung 14, die zweite Dämpfungseinrichtung 15 und die dritte Dämpfungseinrichtung 16 sind als Teil der der Anzeigeeinrichtung 3 nachgeordneten Dämpfungseinrichtung 4 ausgebildet. Beispielsweise sind die erste Dämpfungseinrichtung 14, die zweite Dämpfungseinrichtung 15 und die dritte Dämpfungseinrichtung 16 in Reihe geschaltet.

Dabei ist erste Dämpfungseinrichtung 14 dazu eingerichtet, die Rot-Blendbildanteile stärker als die Rot-Nutzbildanteile zu dämpfen.

Die zweite Dämpfungseinrichtung 15 ist dazu eingerichtet, die Grün-Blendbildanteile stärker als die Grün-Nutzbildanteile zu dämpfen.

Die dritte Dämpfungseinrichtung 16 ist dazu eingerichtet, die Blau-Blendbildanteile stärker als die Blau-Nutzbildanteile zu dämpfen.

Die Fig. 13 zeigt ein schematisches Ablaufdiagramm eines Verfahrens zur Reduzierung von kompromittierender Abstrahlung.

In Schritt S1 wird eine Abfolge von Bildern aus Nutzbildern und Blendbildern erzeugt.

In Schritt S2 wird die erzeugte Abfolge mittels einer Anzeigevorrichtung, insbesondere mittels eines Bildschirms, angezeigt.

In Schritt S3 werden die angezeigten Nutzbilder und Blendbilder derart gedämpft, dass die Blendbilder stärker als die Nutzbilder gedämpft werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Vorrichtung
- 2: Erzeugungsmittel
- 3: Anzeigeeinrichtung, insbesondere Bildschirm
- 4: Dämpfungseinrichtung, insbesondere Shutter-Einrichtung
- 5: Einstellmittel
- 6: Ansteuermittel
- 7: Bereich
- 8: Steuervorrichtung, insbesondere Computer
- 9: dedizierte Vorrichtung
- 10: Bereitstellungsmittel
- 11: erstes Erzeugungsmittel
- 12: zweites Erzeugungsmittel
- 13: drittes Erzeugungsmittel
- 14: erste Dämpfungseinrichtung
- 15: zweite Dämpfungseinrichtung
- 16: dritte Dämpfungseinrichtung
- A: Abfolge
- A1: erste Abfolge
- A2: zweite Abfolge
- A3: dritte Abfolge
- B: Blau-Signal
- BB: Blendbild
- G: Grün-Signal
- N: Nutzer
- NB: Nutzbild
- R: Rot-Signal

## Patentansprüche

1. Vorrichtung (1) zur Reduzierung von kompromittierender Abstrahlung, mit:
einem Erzeugungsmittel (2) zum Erzeugen einer Abfolge (A) von Bildern aus Nutzbildern (NB) und Blendbildern (BB),
einer mit dem Erzeugungsmittel (2) gekoppelten Anzeigeeinrichtung (3) zum Anzeigen der erzeugten Abfolge (A), und
einer der Anzeigeeinrichtung (3) nachgeordneten Dämpfungseinrichtung (4), welche dazu eingerichtet ist, die Blendbilder (BB) der erzeugten Abfolge (A) stärker als die Nutzbilder (NB) der erzeugten Abfolge (A) zu dämpfen.

2. Vorrichtung nach Anspruch 1,
**dadurch gekennzeichnet,**
**dass** die Dämpfungseinrichtung (4) die Blendbilder (BB) der erzeugten Abfolge (A) derart stärker als die Nutzbilder (NB) der erzeugten Abfolge (A) dämpft, dass im Wesentlichen die Nutzbilder (NB) der gedämpften Abfolge (A) visuell wahrnehmbar sind.

3. Vorrichtung nach Anspruch 1 oder 2,
**dadurch gekennzeichnet,**
**dass** die Dämpfungseinrichtung (4) dazu eingerichtet ist, die Blendbilder (BB) der erzeugten Abfolge (A) um ein eingestelltes Verhältnis stärker als die Nutzbilder (NB) der erzeugten Abfolge (A) zu dämpfen.

4. Vorrichtung nach Anspruch 3,
**dadurch gekennzeichnet,**
**dass** ein Einstellmittel (5) zum Einstellen des Verhältnisses zwischen der Dämpfung der Blendbilder (BB) der erzeugten Abfolge (A) und der Dämpfung der Nutzbilder (NB) der erzeugten Abfolge (A) vorgesehen ist.

5. Vorrichtung nach einer der Ansprüche 1 bis 4,
**dadurch gekennzeichnet,**
**dass** die Dämpfungseinrichtung (4) als ein Shutter-Vorsatz ausgebildet ist, welcher auf die Anzeigeeinrichtung (3) aufgeklebt ist, mittels eines Klettverschlusses mit der Anzeigeeinrichtung (3) gekoppelt ist, mit zumindest einem Bügel an der Anzeigeeinrichtung gehaltert ist, auf einem Ständer vor der Anzeigeeinrichtung (3) angeordnet ist oder in einem Bildschirm der Anzeigeeinrichtung (3) integriert ist.

6. Vorrichtung nach Anspruch 5,
**dadurch gekennzeichnet,**
**dass** der Shutter-Vorsatz (4) mittels eines Ansteuermittels (6) derart ansteuerbar ist, insbesondere ein- und ausschaltbar ist, dass die Blendbilder (BB) der erzeugten Abfolge (A) nicht durchgelassen werden und die Nutzbilder (NB) der erzeugten Abfolge (A) durchgelassen werden.

7. Vorrichtung nach Anspruch 5 oder 6,
**dadurch gekennzeichnet,**
**dass** der Shutter-Vorsatz (4) eine Mehrzahl von einzeln ansteuerbaren Bereichen (7) zum Dämpfen der Blendbilder (BB) und der Nutzbilder (NB) der erzeugten Abfolge (A) aufweist.

8. Vorrichtung nach einem der Ansprüche 1 bis 4,
**dadurch gekennzeichnet,**
**dass** die Dämpfungseinrichtung (4) als eine 3D-Shutter-Brille ausgebildet ist.

9. Vorrichtung nach einem der Ansprüche 1 bis 8,
**dadurch gekennzeichnet,**
**dass** das Erzeugungsmittel (2) in einer Steuervorrichtung (8) zum Steuern der Anzeigeeinrichtung (3), insbesondere in einem mit der Anzeigeeinrichtung (3) gekoppelten Computer, integriert ist.

10. Vorrichtung nach einem der Ansprüche 1 bis 8,
**dadurch gekennzeichnet,**
**dass** das Erzeugungsmittel (2) in der Anzeigeeinrichtung (3) integriert ist.

11. Vorrichtung nach einem der Ansprüche 1 bis 8,
**dadurch gekennzeichnet,**
**dass** das Erzeugungsmittel (2) in einer dedizierten Vorrichtung (9) integriert ist, welche zwischen der Anzeigeeinrichtung (3) und einer Steuervorrichtung (8) zum Steuern der Anzeigeeinrichtung (3), insbesondere einem Computer, gekoppelt ist.

12. Vorrichtung nach einem der Ansprüche 1 bis 11,
**dadurch gekennzeichnet,**
**dass** das Erzeugungsmittel (2) dazu eingerichtet ist, die Blendbilder (BB) mittels pseudo-zufälligem Rauschens, mittels vorbestimmter geometrischer Muster oder als Komplementärbilder zu den Nutzbildern (NB) zu erzeugen.

13. Vorrichtung nach einem der Ansprüche 1 bis 12,
**dadurch gekennzeichnet,**
**dass** die Anzeigeeinrichtung (3) eine maximale Bildwiederholrate von 200 Hz bis 1000 Hz, bevorzugt von 500 Hz bis 1000 Hz, besonders bevorzugt von 800 Hz bis 1000 Hz, aufweist.

14. Vorrichtung nach einem der Ansprüche 1 bis 13, **gekennzeichnet durch**:
a) ein Bereitstellungsmittel (10) zum Bereitstellen der Nutzbilder (NB) als RGB-Signale (RGB) mit einem Rot-Signal (R), einem Grün-Signal (G) und einem Blau-Signal (B),
b) einem ersten Erzeugungsmittel (11), welches dazu eingerichtet ist, die Rot-Signale (R) zu empfangen und abhängig davon eine erste Abfolge (A1) aus Rot-Nutzbildanteilen und Rot-Blendbildanteilen zu erzeugen,
c) einem zweiten Erzeugungsmittel (12), welches dazu eingerichtet ist, die Grün-Signale (G) zu empfangen und abhängig davon eine zweite Abfolge (A2) aus Grün-Nutzbildanteilen und Grün-Blendbildanteilen zu erzeugen,
d) ein drittes Erzeugungsmittel (13), welches dazu eingerichtet ist, die Blau-Signale (B) zu empfangen und abhängig davon eine dritte Abfolge (A3) aus Blau-Nutzbildanteilen und Blau-Blendbildanteilen zu erzeugen,
e) einer Anzeigeeinrichtung (3) zum Anzeigen der erzeugten Abfolgen (A1, A2, A3),
f) einer ersten Dämpfungseinrichtung (14), welche dazu eingerichtet ist, die Rot-Blendbildanteile stärker als die Rot-Nutzbildanteile zu dämpfen,
g) einer zweiten Dämpfungseinrichtung (15), welche dazu eingerichtet ist, die Grün-Blendbildanteile stärker als die Grün-Nutzbildanteile zu dämpfen, und
h) einer dritten Dämpfungseinrichtung (16), welche dazu eingerichtet ist, die Blau-Blendbildanteile stärker als die Blau-Nutzbildanteile zu dämpfen.

15. Verfahren zur Reduzierung von kompromittierender Abstrahlung, mit den Schritten:
Erzeugen (S1) einer Abfolge von Bildern aus Nutzbildern und Blendbildern;
Anzeigen (S2) der erzeugten Abfolge mittels einer Anzeigeeinrichtung; und
Dämpfen (S3) der Nutzbilder und der Blendbilder derart, dass die Blendbilder stärker als die Nutzbilder gedämpft werden.
